**Europäisches Patentamt**

(19) **European Patent Office**

**Office européen des brevets**

(11) Veröffentlichungsnummer: **0 074 650**
**B1**

(12) EUROPÄISCHE PATENTSCHRIFT

(45) Veröffentlichungstag der Patentschrift:
20.03.85

(51) Int. Cl.⁴: **F 02 M 55/00**

(21) Anmeldenummer: **82108407.6**

(22) Anmeldetag: **11.09.82**

(54) **Kraftstoffeinspritzpumpe für Brennkraftmaschinen.**

(30) Priorität: 16.09.81 DE 3136751

(43) Veröffentlichungstag der Anmeldung:
23.03.83 Patentblatt 83/12

(45) Bekanntmachung des Hinweises auf die Patenterteilung:
20.03.85 Patentblatt 85/12

(84) Benannte Vertragsstaaten:
AT DE FR GB IT

(56) Entgegenhaltungen:
DE - B - 1 172 897
FR - A - 2 265 998

(73) Patentinhaber: **ROBERT BOSCH GMBH, Postfach 50, D-7000 Stuttgart 1 (DE)**

(72) Erfinder: **Sontheimer, Karl, Glühwürmchenweg 40, D-7000 Stuttgart 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Kraftstoffeinspritzpumpe nach dem gattungsbildenden Oberbegriff des Patentanspruchs 1. Es ist bereits aus der DE-B Nr. 1172897 eine solche Kraftstoffeinspritzpumpe bekannt, deren Prallschutzring aus Stahlblech gezogen ist und von einem als Haltemittel dienenden Sprengring gegen eine als Anlageschulter ausgebildete Stirnfläche einer Haltebuchse gedrückt wird. Bei den bisher üblichen Einspritzdrücken genügte ein solcher Schutzring den Anforderungen vollauf, und die gehärtete Oberfläche des Ringes widerstand der Aufprallenergie des bei Einspritzende aus der Rückströmöffnung austretenden Kraftstoffstrahles. Nun hat es sich jedoch gezeigt, dass bei der für moderne Direkteinspritzmotoren notwendigen Erhöhung der Einspritzdrücke die bisher verwendeten Prallschutzringe im Laufe der Zeit zerstört werden, d. h. der mit extrem hoher Energie austretende Kraftstoffstrahl trägt die Oberfläche der Innenwandung des Prallschutzringes durch Erosion ab, bis die Wand durchstossen ist. Danach zerstört der nicht mehr durch den Schutzring behinderte Kraftstoffstrahl das normalerweise aus Aluminium bestehende Pumpengehäuse in sehr kurzer Zeit.

Höhere Standzeiten des Prallschutzringes und damit eine längere Lebensdauer der Einspritzpumpen können erzielt werden, wenn der Prallschutzring während des Betriebes eine Drehbewegung ausführt, so dass immer wieder neue Wandstellen dem Kraftstoffstrahl ausgesetzt sind. Eine solche Drehbewegung war in einigen Fällen zu beobachten, sie fand jedoch bei den bekannten Ringen nur gelegentlich statt; eine durch entsprechende Mittel aufgezwungene und unter allen Betriebsbedingungen erfolgende Drehbewegung konnte bisher nicht erreicht werden.

Aus den deutschen Offenlegungsschriften Nrn. 2442010 und 2442088 sind hülsenförmige Prallschutzringe bekannt geworden, die zur Ermöglichung einer Drehbewegung sowohl in axialer als auch in radialer Richtung mit Spiel eingebaut wurden. Bei diesen Kraftstoffeinspritzpumpen besteht die Gefahr, dass durch Schwingbewegungen der Prallschutzringe wegen des vorhandenen Spieles die benachbarten Anlageflächen und auch die Stirnflächen der Ringe sehr schnell zerstört werden; eine gesicherte und immer stattfindende Drehbewegung konnte nicht beobachtet werden. Bei der nach der DE-A Nr. 2442010 geschlitzten Ausführung des bekannten Ringes besteht die Gefahr, dass der an der Verbindungsstelle des Ringes vorhandene Spalt eine Angriffsfläche für den Kraftstoffstrahl bietet und durchspült wird.

Aufgabe der Erfindung ist es nun, bei einer Kraftstoffeinspritzpumpe der gattungsgemässen Bauart den Verschleiss des Prallschutzringes herabzusetzen und durch geeignete Mittel eine in jedem Betriebszustand nachweisbare, prinzipbedingt steuerbare und sichere Drehung des Ringes zu erzielen.

### Vorteile der Erfindung

Bei der erfindungsgemässen Kraftstoffeinspritzpumpe mit den kennzeichnenden Merkmalen des Patentanspruchs 1 bildet der nach aussen gebogene, trichterförmige Kragen ein axiales Gleitlager für den Prallschutzring, dessen Reibbeiwert durch den hindurchgequetschten Kraftstoff so weit herabgesetzt wird, dass trotz der Andrückkraft des Sprengringes die in Umfangsrichtung wirkende Komponente des schräg auftreffenden Kraftstoffstrahles den Ring in Drehung versetzt. Damit verteilt sich die Aufprallfläche des Kraftstoffstrahles über den gesamten Umfang der betroffenen Innenwand des Prallschutzringes, womit die Dauerfestigkeit des Ringes in gewünschter Weise erreicht wird. Die gegenüber der Querschnittsfläche des Ringes vergrösserte Stirnfläche des Kragens erzeugt in den mit der Anlageschulter gebildeten Berührungsflächen eine die Austrittsenergie des Kraftstoffs vernichtende Labyrinthwirkung, wodurch in vorteilhafter Weise eine Umgehung der Durchflutungsöffnungen verhindert wird, und die trichterförmige Ausbildung dient gleichzeitig der Zentrierung des Ringes und erleichtert dessen Fertigung.

Mit den in den Unteransprüchen aufgeführten Massnahmen sind vorteilhafte Weiterbildungen und Verbesserungen des Prallschutzes an der im Hauptanspruch festgelegten Kraftstoffeinspritzpumpe erzielbar. So wird durch die kennzeichnenden Merkmale des Anspruchs 3 erreicht, dass der durch den engen Spalt erzielte Druckaufbau im Ringraum einen Teil des rückströmenden Kraftstoffs in die Spaltfläche zwischen der Anlageschulter und dem Kragen des Prallschutzringes presst und somit die Gleitlagerwirkung der aufeinanderliegenden Flächen verbessert und die Drehbewegung des Ringes unterstützt.

Mit dem in Patentanspruch 4 angegebenen Werkstoff und mit Hilfe der in Patentanspruch 5 angegebenen Verfahrensschritte zur Herstellung des Prallschutzringes ist erstmals ein durchgehärteter Prallschutzring entwickelt worden, der neben höchster Verschleissfestigkeit und sicher beherrschbarer Wärmebehandlung kostengünstig hergestellt werden kann.

### Zeichnung

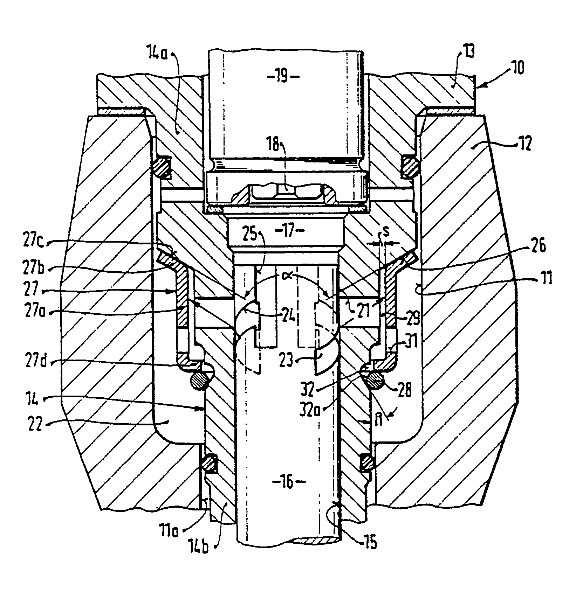

Ein Ausführungsbeispiel der Erfindung wird nachstehend anhand der Zeichnung beschrieben, die einen Längsschnitt durch den erfindungswesentlichen Teil eines Pumpenelements einer Kraftstoffeinspritzpumpe für Brennkraftmaschinen zeigt.

### Beschreibung des Ausführungsbeispieles

Das in der Zeichnung nur teilweise dargestellte Pumpenelement 10 ist in eine abgesetzte Aufnahmebohrung 11 eines aus Aluminium gegossenen Pumpengehäuses 12 eingesetzt und im dargestellten Beispiel mittels eines Flansches 13 in bekannter Weise befestigt. Der Flansch 13 ist an eine Zylinderbüchse 14 angeformt, in deren Zylinderbohrung 15 ein Pumpenkolben 16 axial- und drehbeweglich geführt ist. Der als Teil der Zylinderbohrung 15 einerseits vom Pumpenkolben 16 begrenzte Pumpenarbeitsraum 17 ist andererseits zur Förderseite hin von einem ein Druckventil 18 enthaltenden Druckventilgehäuse 19 abgeschlossen, die beide von bekannter Bauart und nur teilweise dargestellt sind. Der Pumpenarbeitsraum 17 ist über zwei diametral gegenüberliegende, zugleich als Saug- und Rückströmöffnungen dienende Steuerbohrungen 21 mit einem zugleich als Saugraum dienenden Rückströmraum 22 verbunden, in den über eine an eine nicht näher dargestellte Kraftstoffzulaufleitung der von einer Vorförderpumpe unter Zulaufdruck gesetzte Kraftstoff zuströmt.

In die Mantelfläche des Pumpenkolbens 16 sind zwei als Schrägnuten ausgebildete Ausnehmungen 23 eingearbeitet, deren zum Pumpenarbeitsraum 17 hinweisende Begrenzung mit der Mantelfläche des Pumpenkolbens 16 eine Steuerkante 24 bildet. Diese Ausnehmungen 23 sind ständig über je eine als Längsnut in den Pumpenkolben 16 eingearbeitete Stoppnut 25 mit dem Pumpenarbeitsraum 17 verbunden.

Anstelle der Stoppnut 25 kann selbstverständlich auch eine Längsbohrung innerhalb des Pumpenkolbens 16 den Pumpenarbeitsraum 17 mit der Ausnehmung 23 verbinden, und anstelle der die Steuerkante 24 bildenden Ausnehmung 23 kann die Steuerkante auch schraubenlinienförmig in die Mantelfläche eingefräst oder eingeschliffen sein.

Die Zylinderbüchse 14 ist mit einem im Durchmesser grösseren Teil 14a in dem erweiterten Teil der Aufnahmebohrung 11 eingepasst und mit einem im Durchmesser reduzierten Teil 14b in dem mit 11a bezeichneten engeren Teil der Aufnahmebohrung 11 mit geringem Spiel eingesetzt.

Am Übergang zwischen den beiden Teilen 14a und 14b der Zylinderbüchse 14 ist eine abgeschrägte Anlageschulter 26 gebildet, die unter einem Kegelwinkel von $\alpha = 120°$ an die Zylinderbüchse 14 angedreht ist. Über den im Durchmesser reduzierten Teil 14b der Zylinderbüchse 14 ist ein Prallschutzring 27 geschoben, der von einem als Haltemittel dienenden Sprengring 28 gegen die Anlageschulter 26 gedrückt wird, die — in Pumprichtung gesehen — oberhalb der Rückströmöffnungen 21 an die Zylinderbüchse 14 angearbeitet ist.

Der Prallschutzring 27 umschliesst im Bereich der Rückströmöffnungen 21 mit einem zylindrischen Wandteil 27a einen Ringraum 29, der über axial gegenüber den Rückströmöffnungen 21 versetzte Durchflutungsöffnungen 31 im Wandteil 27a die Rückströmöffnungen 21 mit dem Rückströmraum 22 verbindet. Im Anschluss an seinen zylindrischen Wandteil 27a trägt der Prallschutzring 27 einen annähernd radial nach aussen gebogenen kreisringförmigen Kragen 27b, der im dargestellten Beispiel trichterförmig unter dem Kegelwinkel $\alpha$ von etwa 120° an den Ring 27 angeformt ist und an der Anlageschulter 26 anliegt. Der Kragen 27b des Prallschutzringes 27 weist eine um ein Mehrfaches gegenüber der Querschnittsfläche des zylindrischen Wandteils 27a vergrösserte Stirnfläche 27c auf, die genau parallel zur Anlageschulter 26 liegt, und die beide, wie weiter hinten näher ausgeführt, ein Gleitlager für den Prallschutzring 27 bilden.

Der vom Prallschutzring 27 umschlossene Ringraum 29 bildet einen sehr engen radialen Spalt, dessen Spaltbreite s bei den in den grössten Stückzahlen gefertigten und für Kraftfahrzeugmotoren verwendbaren Kraftstoffeinspritzpumpen vorzugsweise zwischen 0,4 und 1,2 mm liegt. Das Volumen dieses Ringraumes 29 und der Austrittquerschnitt an den Durchflutungsöffnungen 31 sind so aufeinander abgestimmt, dass durch den aus den Rückströmöffnungen 21 austretenden Kraftstoff ein gegenüber dem Druck in Rückströmraum 22 erhöhter Druck im Ringraum 29 aufgebaut wird. Durch diesen Druck wird Kraftstoff in den Spalt zwischen der Stirnfläche 27c und der Anlageschulter 26 gedrückt, bildet dort einen Kraftstofffilm und somit ein Axialgleitlager für den Prallschutzring 27. Damit der Prallschutzring 27 nicht unkontrolliert von der Anlageschulter 26 abhebt, ist der Sprengring 28 in eine mit einer konischen Auflagefläche 32a versehene Ringnut 32 im Aussenumfang der Zylinderbüchse 14 eingelassen. Der mit $\beta$ bezeichnete Neigungswinkel der konischer Auflagefläche 32a und die Vorspannkraft des Sprengringes 28 sind derart abgestimmt, dass sie den Prallschutzring 27 spielfrei gegen die Anlageschulter 26 halten, jedoch eine vom Rückströmstrahl des Kraftstoffs und vom Druckaufbau im Ringraum 29 ausgelöste Drehbewegung des Prallschutzringes 27 erlauben. Zur Übertragung der Axialkraft auf den Prallschutzring 27 hat letzterer an seinem dem Sprengring 28 zugewandten Ende einen nach innen gebogenen Kragen 27d, mit dem er auf dem im Durchmesser reduzierten Teil 14b der Zylinderbüchse 14 geführt ist.

Durch den zur Erreichung des notwendigen Druckaufbaus im Ringraum 29 sehr engen Spalt s ist es möglich, den nach aussen gestellten Kragen 27a des Prallschutzringes 27 mit einer genügend grossen Stirnfläche 27c auszubilden, ohne den Durchmesser vorhandener Zylinderbüchsen abändern zu müssen. Dadurch ist der erfindungsgemäss ausgebildete Prallschutzring 27 nahezu bei allen gängigen Pumpentypen durch eine geringfügige Änderung am Pumpenelement, z. B. durch Andrehen der Anlageschulter 26, anwendbar.

Die Anlageschulter 26 muss nicht wie beim dargestellten Ausführungsbeispiel direkt an die Zylinderbüchse 14 angearbeitet sein, sie kann auch von der Stirnfläche einer Haltebuchse oder von einer entsprechenden Anlageschulter in einem anderen Befestigungsteil gebildet sein.

Der Prallschutzring 27 ist aus tiefziehfähigem, vorzugsweise 1,2 mm dickem Kugellagerstahlblech hergestellt. Er kann mittels Kalttiefziehen, anschliessendem Austanzen der Durchflutungsöffnungen 31 auf einem Sonderwerkzeug ohne nachträgliche Arbeitsgänge seine endgültige Form erhalten und wird danach durchgehärtet. Das bisher nicht angewendete Durchhärteverfahren hat den Vorteil, dass die Gefahr von Fleckenbildung, d. h. von nicht genügend gehärteten oder noch weichen Stellen vermieden wird, wie sie z. B. bei einsatzgehärteten Teilen vorkommen können. Damit ist eine bisher nicht erreichbare Standfestigkeit des Prallschutzringes 27 erzielbar.

Die beim beschriebenen Prallschutzring 27 erfolgende zwangsläufige Drehbewegung wird durch verschiedene Faktoren begünstigt. Wie durch einen Pfeil innerhalb der Rückströmöffnungen 21 angedeutet, tritt der bei Einspritzende entstehende Kraftstoffstrahl schräg aus der Ausnehmung 23 im Pumpenkolben 16 aus und weist, entsprechend der Neigung der schrägen Steuerkante 24, auch noch eine im Umfangsrichtung des Prallschutzringes 27 wirkende Komponente auf, so dass der auf die Innenwand des Prallschutzringes 27 auftreffende Kraftstoffstrahl diesem einen Drehimpuls vermittelt. Dies würde jedoch nicht in allen Fällen genügen, letzteren sicher in Drehbewegung zu versetzen, sondern der bereits beschriebene Druckaufbau im Ringraum 29 und die Gleitlagerbildung im Spalt zwischen der Anlageschulter 26 und der Stirnfläche 27c sowie die definierte Andrückkraft des Sprengringes 28 bewirken zusammengenommen erst eine absolut sichere Drehbewegung des Ringes 27.

Die konische Ausbildung der Anlageschulter 26 dient nicht nur der Vergrösserung der entsprechenden Stirnfläche 27c des Prallschutzringes 27 und dessen Zentrierung, sondern hat zusätzlich den Vorteil, dass der Übergang zwischen den beiden Teilen 14a und 14b der Zylinderbüchse 14 zur Vermeidung von Schleifrissen und Kerbspannungen optimal ausgebildet werden kann.

## Patentansprüche

1. Kraftstoffeinspritzpumpe für Brennkraftmaschinen, mit einer einen Pumpenkolben (16) aufnehmenden Zylinderbüchse (14), die mindestens eine vom Pumpenkolben gesteuerte Rückströmöffnung (21) aufweist und über die ein Prallschutzring (27) geschoben ist, der mit einem radial nach innen gebogenen Kragen (27d) auf der Zylinderbüchse (14) geführt und in axialer Richtung von einem Sprengring (28) beaufschlagt ist, der in eine mit einer konischen Auflagefläche (32a) versehene Ringnut (32) im Aussenumfang der Zylinderbüchse (14) eingelassen ist und den Prallschutzring (27) gegen eine in Pumprichtung oberhalb der Rückströmöffnung (21) befindliche Anlageschulter (26) drückt, wobei der Prallschutzring (27) mit einem zylindrischen Wandteil (27a) einen Ringraum (29) umschliesst, der über zur Rückströmöffnung (21) axial versetzte Durchflutungsöffnungen (31) in dem Wandteil (27a) die Rückströmöffnung (21) mit einem Rückströmraum (22) verbindet, und der Prallschutzring (27) im Anschluss an seinen zylindrischen Wandteil (27a) einen um gebogenen, kreisringförmigen Kragen (27b) trägt, der an der Anlageschulter (26) anliegt und eine um ein Mehrfaches gegenüber der Querschnittsfläche des zylindrischen Wandteils (27a) grössere Stirnfläche (27c) aufweist, dadurch gekennzeichnet, dass der Kragen (27b) des Prallschutzringes (27) nach aussen gebogen und trichterförmig ausgebildet ist, und dass der Neigungswinkel (β) der konischen Auflagefläche (32a) und die Vorspannkraft des Sprengringes (28) derart abgestimmt sind, dass sie den Prallschutzring (27) spielfrei gegen die Anlageschulter (26) halten, jedoch eine vom Rückströmstrahl des Kraftstoffes und vom Druckaufbau im Ringraum (29) ausgelöste Drehbewegung des Prallschutzringes (27) erlauben.

2. Kraftstoffeinspritzpumpe nach Anspruch 1, dadurch gekennzeichnet, dass der trichterförmig ausgebildete Kragen (27b) einen Kegelwinkel (α) von etwa 120° einschliesst.

3. Kraftstoffeinspritzpumpe nach einem der Ansprüche 1 oder 2, dadurch gekennzeichnet, dass der vom Prallschutzring (27) umschlossene Ringraum (29) einen engen radialen Spalt bildet, dessen Spaltbreite (s) etwa in einem Bereich zwischen 0,4 und 1,2 mm liegt.

4. Kraftstoffeinspritzpumpe nach einem der vorangehenden Ansprüche, dadurch gekennzeichnet, dass der Prallschutzring (27) aus tiefziehfähigem Kugellagerstahlblech hergestellt ist.

5. Kraftstoffeinspritzpumpe nach Anspruch 4, dadurch gekennzeichnet, dass der Prallschutzring (27) mittels Kalttiefziehen, Ausstanzen der Durchflutungsöffnungen (31) und Durchhärten hergestellt ist.

## Claims

1. Fuel injection pump for internal combustion engines, with a cylinder bush (14) receiving a pump plunger (16) and having at least one return-flow orifice (21) controlled by said pump plunger, and over said bush is pushed an impact protection ring (27) which is guided on the cylinder bush (14) by means of a collar (27d) bent radially inwards and which is stressed in the axial direction by a spring ring (28) which is inserted into an annular groove (32), provided with a conical bearing surface (32a) and located in the outer periphery of the cylinder bush (14), and which presses the impact protection ring (27) against a bearing shoulder (26) arranged above the return-flow orifice (21) in the pumping direction, the impact protection ring (27) enclosing by means of a cylindrical wall part (27a) an annular space (29) which, via through-flow orifices (31) in the wall part (27a) which are offset axially relative to the return-flow orifice (21), connects the return-flow orifice (21) to a return-flow space (22), and the impact protection ring (27) carrying, so as to adjoin its cylindrical wall part (27a), a bent-round annular collar (27b) which rests against the bearing shoulder (26) and which has an end face (27c) many times larger than the cross-sectional area of the cylindrical wall part (27a), characterized in that the collar (27b) of the impact protection ring (27) is bent outwards and made funnel-shaped, and in that the angle of inclination (β) of the conical bearing surface (32a) and the pre-stressing force of the spring ring (28) are coordinated with one another in such a way that they hold the impact protection ring (27) against the bearing shoulder (26) free of play but allow a rotary movement of the impact protection ring (27), which is initiated by the return-flow jet of fuel and by the build-up of pressure in the annular space (29).

2. Fuel injection pump according to Claim 1, characterized in that the funnel-shaped collar (27b) encloses a cone angle ($\alpha$) of approximately 120°.

3. Fuel injection pump according to Claim 1 or 2, characterized in that the annular space (29) enclosed by the impact protection ring (27) forms a narrow radial gap, the gap width (s) of which is approximately in a range between 0.4 and 1.2 mm.

4. Fuel injection pump according to one of the preceding claims, characterized in that the impact protection ring (27) is produced from deep-drawable ball-bearing sheet steel.

5. Fuel injection pump according to Claim 4, characterized in that the impact protection ring (27) is produced by means of cold deep-drawing, stamping-out of the through-flow orifices (31) and complete hardening.

## Revendications

1. Pompe d'injection de carburant pour moteurs à combustion interne, comprenant un manchon de cylindre (14) recevant un piston de pompage (16), manchon comportant au moins un orifice d'écoulement de retour (21) commandé par le piston et par-dessus lequel est glissée une bague de protection contre l'impact (27), laquelle est guidée sur le manchon de cylindre (14) avec une collerette (27d) retournée vers l'intérieur, et est chargée en direction axiale par une bague expansible à ressort (28) qui est introduite dans une gorge annulaire (32), pourvue d'une surface d'appui conique (32a), formée dans le pourtour extérieur du manchon de cylindre (14), et qui presse la bague de protection d'impact (27) contre un épaulement de butée (26) se trouvant, en direction du pompage, au-dessus de l'orifice d'écoulement de retour (21), la bague de protection contre l'impact (27) enfermant, avec une portion de paroi (27a) du cylindre, un espace annulaire 29 qui relie, par l'intermédiaire d'orifices de traversée (31) décalés axialement par rapport à l'orifice d'écoulement de retour (21), avec une chambre de courant de retour (22), la bague de protection d'impact (27), à la suite de sa partie de paroi cylindrique (27a), supportant une collerette recourbée en forme d'anneau (27b) qui est appliquée contre l'épaulement de butée (26) et qui présente une face frontale (27c) de surface plusieurs fois supérieure à la surface de section transversale de la portion de paroi cylindrique (27c), pompe caractérisée en ce que la collerette (27b) de la bague de protection d'impact (27) est recourbée vers l'extérieur et constituée en forme d'entonnoir, et l'angle d'inclinaison ($\beta$) de la surface d'appui conique (32a) ainsi que la force de tension préalable de la bague expansible à ressort (28) étant accordés entre eux de telle sorte qu'elle maintienne la bague de protection (27), sans jeu, contre l'épaulement de butée (26), tout en permettant cependant un mouvement de rotation de la bague (27) déclenché par le jet de courant de retour du carburant et par l'élévation de pression dans l'espace annulaire (29).

2. Pompe d'injection de carburant suivant la revendication 1, caractérisée en ce que la collerette (27b) constituée en forme d'entonnoir enferme un angle de cône ($\alpha$) égal à environ 120°.

3. Pompe d'injection de carburant suivant l'une des revendications 1 ou 2, caractérisée en ce que l'espace annulaire (29) enfermé par la bague de protection (27) forme une fente radiale étroite dont la largeur est située entre 0,4 et 1,2 mm.

4. Pompe à injection de carburant suivant l'une des revendications 1 à 3, caractérisée en ce que la bague de protection contre l'impact (27) est fabriquée en une tôle d'acier à palier à bille pouvant être emboutie pour son formage.

5. Pompe à injection de carburant suivant la revendication 4, caractérisée en ce que la bague de protection contre l'impact (27) est fabriquée par emboutissage à froid, estampage des orifices de traversée (31) et par trempage de durcissement.